# EUROPÄISCHE PATENTANMELDUNG

(11) **EP 1 630 184 A1**
(43) Veröffentlichungstag der Anmeldung: **01.03.2006**
(21) Anmeldenummer: 05015593.6
(22) Anmeldetag: 19.07.2005
(51) Int. Cl.: C08G 18/16, C08G 18/76

(54) **Katalysatorsystem, insbesondere zur Herstellung von Polyurethanhartschaumstoffen**

(30) Priorität: 24.08.2004 DE 102004041143
(71) Anmelder: BASF Aktiengesellschaft, 67056 Ludwigshafen (DE)
(72) Erfinder: von Malotki, Peter Dr., 49448 Lemförde (DE); Hensiek, Rainer, 49328 Melle (DE); Fabisiak, Roland, 49448 Brockum (DE); Jacobmeier, Olaf, 32312 Lübbecke (DE); Biedermann, Anja, Dr., 49356 Diepholz (DE); Kampf, Gunnar, 32351 Stemwede-Haldem (DE)

(57) **Zusammenfassung**

Katalysatorsystem enthaltend
(i) Verbindung mit 1, 2, 3, 4 oder 5 Stickstoffatomen,
(ii) Verbindung mit mehr als 1 Stickstoffatom,
(iii) Verbindung mit mindestens 1 Stickstoffatom,
wobei als (i), (ii) und (iii) jeweils unterschiedliche Verbindungen enthalten sind.

## Beschreibung

Die Erfindung betrifft Katalysatorsysteme, insbesondere Polyolkomponente, enthaltend
(i) Verbindung, bevorzugt mit einem Molekulargewicht kleiner 500 g/mol, bevorzugt kleiner als 300 g/mol, besonders bevorzugt kleiner 200 g/mol, insbesondere kleiner 150 g/mol und mit 1, 2, 3, 4 oder 5, bevorzugt 1, 2, 3 oder 4, besonders bevorzugt 1, 2 oder 3, insbesondere 1 oder 2, insbesondere bevorzugt 1 Stickstoffatom, insbesondere besonders bevorzugt Dimethylcyclohexylamin,
(ii) Verbindung mit einem Molekulargewicht größer 100 g/mol, bevorzugt größer 200 g/mol, besonders bevorzugt größer 300 g/mol mit mehr als 1, bevorzugt mehr als 2, besonders bevorzugt 2 bis 10, insbesondere 4, 5 oder 6, insbesondere bevorzugt 5 oder 6, ganz besonders bevorzugt 6 Stickstoffatomen, insbesondere bevorzugt 1,3,5-Tris(3-dimethylaminopropyl)-hexahydro-s-triazin,
(iii) Verbindung mit einem Molekulargewicht kleiner 500 g/mol bevorzugt kleiner als 300 g/mol, besonders bevorzugt kleiner 200 g/mol mit mindestens 1, bevorzugt mindestens 2, besonders bevorzugt 2 oder 3 Stickstoffatomen und insbesondere in der Summe 2, 3, 4 oder 5 Stickstoff- und Sauerstoffatomen, insbesondere bevorzugt in der Summe 2 oder 3 Stickstoff- und Sauerstoffatomen, insbesondere besonders bevorzugt 3 Stickstoffatomen oder 2 Stickstoffatomen und einem Sauerstoffatom, bevorzugt Pentamethyldiethylenetriamin, Hexamethyltriethylentetramin und/oder Bis-(dimethylaminoethyl)ether, besonders bevorzugt Pentamethyldiethylenetriamin und/oder Bis-(dimethylaminoethyl)ether, insbesondere Bis-(dimethylaminoethyl)ether,

wobei als (i), (ii) und (iii) jeweils unterschiedliche Verbindungen enthalten sind und besonders bevorzugt die Verbindungen (i), (ii) und (iii) in den folgenden Gewichtsanteilen, jeweils bezogen auf das Gesamtgewicht der Komponenten (i), (ii) und (iii) in dem Katalysatorsystem und/oder dem Polyurethanschaum enthalten sind:
(i) 15 bis 90, bevorzugt 25 bis 88, besonders bevorzugt 32 bis 85, insbesondere 40 bis 76, insbesondere bevorzugt 45 bis 70, insbesondere besonders bevorzugt 50 bis 65 Gew.-%,
(ii) 4 bis 60, bevorzugt 4 bis 45, besonders bevorzugt 5 bis 35, insbesondere 8 bis 30, insbesondere bevorzugt 11 bis 30, insbesondere besonders bevorzugt 14 bis 30 Gew.-%,
(iii) 0,5 bis 55, bevorzugt 5 bis 45, besonders bevorzugt 8 bis 40, insbesondere 10 bis 30, insbesondere bevorzugt 13 bis 22, insbesondere besonders bevorzugt 15 bis 22 Gew.-%.

Außerdem betrifft die Erfindung bevorzugt Katalysatorsysteme, insbesondere Polyolkomponente, enthaltend
(i) Verbindung, bevorzugt mit einem Molekulargewicht kleiner 500 g/mol, bevorzugt kleiner als 300 g/mol, besonders bevorzugt kleiner 200 g/mol, insbesondere kleiner 150 g/mol und mit 1, 2, 3, 4 oder 5, bevorzugt 1, 2, 3 oder 4, besonders bevorzugt 1, 2 oder 3, insbesondere 1 oder 2, insbesondere bevorzugt 1 Stickstoffatom, insbesondere besonders bevorzugt Dimethylcyclohexylamin,
(ii) Verbindung mit einem Molekulargewicht größer 100 g/mol, bevorzugt größer 200 g/mol, besonders bevorzugt größer 300 g/mol mit mehr als 1, bevorzugt mehr als 2, besonders bevorzugt 2 bis 10, insbesondere 4, 5 oder 6, insbesondere bevorzugt 5 oder 6, ganz besonders bevorzugt 6 Stickstoffatomen, insbesondere bevorzugt 1,3,5-Tris(3-dimethylaminopropyl)-hexahydro-s-triazin,
(iii) Verbindung mit einem Molekulargewicht kleiner 500 g/mol bevorzugt kleiner als 300 g/mol, besonders bevorzugt kleiner 200 g/mol mit mindestens 1, bevorzugt mindestens 2, besonders bevorzugt 2 oder 3 Stickstoffatomen und insbesondere in der Summe 2, 3, 4 oder 5 Stickstoff- und Sauerstoffatomen, insbesondere bevorzugt in der Summe 2 oder 3 Stickstoff- und Sauerstoffatomen, insbesondere besonders bevorzugt 3 Stickstoffatomen oder 2 Stickstoffatomen und einem Sauerstoffatom, bevorzugt Pentamethyldiethylenetriamin, Hexamethyltriethylentetramin und/oder Bis-(dimethylaminoethyl)ether, besonders bevorzugt Pentamethyldiethylenetriamin und/oder Bis-(dimethylaminoethyl)ether, insbesondere Pentamethyldiethylenetriamin,
(iv) Carboxylat, bevorzugt Alkali- und/oder Erdalkalisalz mindestens einer Carbonsäure, bevorzugt Carboxylate mit 1 bis 9, besonders bevorzugt 2 bis 8, insbesondere 8 C-Atome, insbesondere bevorzugt Alkalisalz der 2-Ethylhexansäure und/oder der Essigsäure, insbesondere besonders bevorzugt Alkalisalz der 2-Ethylhexansäure,

wobei als (i), (ii), (iii) und (iv) jeweils unterschiedliche Verbindungen enthalten sind. Des weiteren bezieht sich die Erfindung auf Verfahren zur Herstellung von Polyurethanen, bevorzugt Polyurethanhartschaumstoffen, besonders bevorzugt kontinuierlich nach dem Doppelbandverfahren durch Umsetzung von (a) Isocyanaten mit (b) gegenüber Isocyanaten reaktiven Verbindungen, bevorzugt durch Umsetzung von (a) Isocyanaten mit (b) Verbindungen mit gegenüber Isocyanatgruppen reaktiven Wasserstoffatomen, (c) Treibmittel, (e) Zusatzstoffen, besonders bevorzugt Schaumstabilisatoren und Flammschutzmittel, wobei man die Umsetzung, insbesondere die Umsetzung von (a) mit (b) in Gegenwart von der erfindungsgemäßen Katalysatoren (i), (ii), (iii) und (iv) durchführt. Außerdem betrifft die Erfindung derart erhältliche Polyurethane, insbesondere Polyurethanhartschaumstoffe enthaltend
(i) Verbindung, bevorzugt mit einem Molekulargewicht kleiner 500 g/mol, bevorzugt kleiner als 300 g/mol, besonders bevorzugt kleiner 200 g/mol, insbesondere kleiner 150 g/mol und mit 1, 2, 3, 4 oder 5, bevorzugt 1, 2, 3 oder 4, besonders bevorzugt 1, 2 oder 3, insbesondere 1 oder 2, insbesondere bevorzugt 1 Stickstoffatom, insbesondere besonders bevorzugt Dimethylcyclohexylamin,
(ii) Verbindung mit einem Molekulargewicht größer 100 g/mol, bevorzugt größer 200 g/mol, besonders bevorzugt größer 300 g/mol mit mehr als 1, bevorzugt mehr als 2, besonders bevorzugt 2 bis 10, insbesondere 4, 5 oder 6, insbesondere bevorzugt 5 oder 6, ganz besonders bevorzugt 6 Stickstoffatomen, insbesondere bevorzugt 1,3,5-Tris(3-dimethylaminopropyl)-hexahydro-s-triazin,
(iii) Verbindung mit einem Molekulargewicht kleiner 500 g/mol bevorzugt kleiner als 300 g/mol, besonders bevorzugt kleiner 200 g/mol mit mindestens 1, bevorzugt mindestens 2, besonders bevorzugt 2 oder 3 Stickstoffatomen und insbesondere in der Summe 2, 3, 4 oder 5 Stickstoff- und Sauerstoffatomen, insbesondere bevorzugt in der Summe 2 oder 3 Stickstoff- und Sauerstoffatomen, insbesondere besonders bevorzugt 3 Stickstoffatomen oder 2 Stickstoffatomen und einem Sauerstoffatom, bevorzugt Pentamethyldiethylenetriamin, Hexamethyltriethylentetramin oder Bis-(dimethylaminoethyl)ether, besonders bevorzugt Pentamethyldiethylenetriamin oder Bis-(dimethylaminoethyl)ether, insbesondere Pentamethyldiethylenetriamin,
(iv) Carboxylat, bevorzugt Alkali- und/oder Erdalkalisalz mindestens einer Carbonsäure, bevorzugt Carboxylate mit 1 bis 9, besonders bevorzugt 2 bis 8, insbesondere 8 C-Atome, insbesondere bevorzugt Alkalisalz der 2-Ethylhexansäure und/oder der Essigsäure, insbesondere besonders bevorzugt Alkalisalz der 2-Ethylhexansäure,

wobei als (i), (ii), (iii) und (iv) jeweils unterschiedliche Verbindungen enthalten sind und wobei die Verbindungen (i), (ii), (iii) und (iv) in den folgenden Gewichtsanteilen, jeweils bezogen auf das Gesamtgewicht der Komponenten (i), (ii), (iii) und (iv) in dem Polyurethanhartschaumstoff enthalten sind:
(i) 15 bis 90, bevorzugt 25 bis 88, besonders bevorzugt 32 bis 85, insbesondere 40 bis 76, insbesondere bevorzugt 50 bis 70, insbesondere besonders bevorzugt 55 bis 65 Gew.-%,
(ii) 4 bis 60, bevorzugt 4 bis 45, besonders bevorzugt 5 bis 35, insbesondere 8 bis 25, insbesondere bevorzugt 11 bis 18, insbesondere besonders bevorzugt 14 bis 17 Gew.-%,
(iii) 0,5 bis 55, bevorzugt 5 bis 45, besonders bevorzugt 8 bis 40, insbesondere 10 bis 30, insbesondere bevorzugt 13 bis 22, insbesondere besonders bevorzugt 15 bis 20 Gew.-%,
(iv) 0,5 bis 18, bevorzugt 1 bis 15, besonders bevorzugt 2 bis 11, insbesondere 2 bis 8, insbesondere bevorzugt 3 bis 8, Gew.-%.

Polyurethan-Schaumstoffe, insbesondere Polyurethan-Hartschaumstoffe, sind seit langem bekannt und vielfach in der Literatur beschrieben. Ihre Herstellung erfolgt üblicherweise durch Umsetzung von Polyisocyanaten mit Verbindungen mit mindestens zwei mit Isocyanatgruppen reaktiven Wasserstoffatomen, zumeist Polyether- und Polyesterolen. Im allgemeinen werden bei der Herstellung von Polyurethan-Hartschaumstoffen aminische oder lewissaure Katalysatoren eingesetzt (Polyurethane, Kunststoffhandbuch 7 von G. Oertel, Carl Hanser Verlag). Auch Katalysatorenabmischungen finden sich im Stand der Technik.

WO 03/027161 beschreibt die Verwendung von Pentamethylenediethyletriamin (PMDETA), Dimethylcyclohexylamin (DMCHA) und Trimerisierungskatalysatoren zur Herstellung eines Polyurethanhartschaumstoffs mit günstigen Entformungseigenschaften.

JP2002338651 beschreibt die Verwendung einer Katalysatorenabmischung, welche unter anderem aus dem Salz einer Carbonsäure mit 3 bis 20 C-Atomen und einem quartämärem Ammoniumsalz besteht. Im Rahmen der hierbei angeführten Beispiele werden als zusätzliche Katalysatoren Pentamethylenediethyletriamin (PMDETA) und Dimethylcyclohexylamin (DMCHA) verwendet.
JP2001329036 offenbart die Herstellung von Polyurethanhartschaumstoffen unter Vermeidung von FCKW als Treibmittel. Es werden eine Vielzahl von Katalysatoren aufgezählt.

Ein generelles Problem bei Hartschaumstoffen ist die Ausbildung anisotroper Zellen. Diese bedingen anisotrope druckmechanische Eigenschaften der hergestellten Hartschäume. Dieses wirkt sich häufig negativ aus, da zum Beispiel bei Hartschaumstoffen für Bauanwendungen die hergestellten Dämmelemente senkrecht zu den Deckschichten aufgrund der horizontalen Streckung der Zellen besonders schlechte druckmechanischen Werte und damit geringe Trägfähigkeiten aufweisen. Eine Verbesserung der Isotropie der Zellen führt somit zu einer Verbesserung der mechanischen Daten senkrecht zur Deckschicht und ermöglicht somit die Darstellung von Elementen mit einer verbesserten Tragfähigkeit oder von Elementen mit geringerer Schaumdichte bei gleicher Tragfähigkeit der Elemente.

Aufgabe der vorliegenden Erfindung war es somit, die Anisotropie der Zellen von Hartschaumstoffen zu verringern und dadurch die druckmechanischen Eigenschaften von Polyurethanhartschäumen ohne Erhöhung der Rohdichte zu verbessern. Insbesondere sollen durch die Verbesserung der Anisotropie des PUR-Hartschaumstoffs das Brandverhalten nicht negativ beeinflusst werden.

Diese Probleme konnten durch das eingangs dargestellte Katalysatorsystem, insbesondere der erfindungsgemäße Verfahren und die erfindungsgemäßen Polyurethan-hartschaumstoffe gelöst werden.

Bevorzugt enthält das Katalysatorsystem die Verbindungen (i), (ii), (iii) und (iv) in den folgenden Gewichtsanteilen, jeweils bezogen auf das Gesamtgewicht der Komponenten (i), (ii), (iii) und (iv):
(i) 15 bis 90, bevorzugt 25 bis 88, besonders bevorzugt 32 bis 85, insbesondere 40 bis 76, insbesondere bevorzugt 50 bis 70, insbesondere besonders bevorzugt 55 bis 65 Gew.-%,
(ii) 4 bis 60, bevorzugt 4 bis 45, besonders bevorzugt 5 bis 35, insbesondere 8 bis 25, insbesondere bevorzugt 11 bis 18, insbesondere besonders bevorzugt 14 bis 17 Gew.-%,
(iii) 0,5 bis 55, bevorzugt 5 bis 45, besonders bevorzugt 8 bis 40, insbesondere 10 bis 30, insbesondere bevorzugt 13 bis 22, insbesondere besonders bevorzugt 15 bis 20 Gew.-%,
(iv) 0,5 bis 18, bevorzugt 1 bis 15, besonders bevorzugt 2 bis 11, insbesondere 2 bis 8, insbesondere bevorzugt 3 bis 8, Gew.-%.

Durch das erfindungsgemäße Katalysatorsystem konnte die Anisotropie der hergestellten Hartschaumstoffe und dadurch die druckmechanischen Eigenschaften senkrecht zur Deckschicht von insbesondere von Polyurethanhartschaumstoffelementen verbessert werden, ohne das Brandverhalten der Schäume zu verschlechtern. Die erfindungsgemäßen Katalysatoren (i), (ii) (aminischer Gelkatalysator), (iii) aminischer Treibkatalysator, und (iv) können dabei in dem erfindungsgemäßen Verfahren einzeln insbesondere der Polyolkomponente oder in Mischung insbesondere der Polyolkomponente zugesetzt werden.

Gegebenenfalls können zusätzlich zu den erfindungsgemäßen Katalysatoren noch weitere, allgemein aus der Polyurethanchemie bekannte Katalysatoren eingesetzt werden.

Verfahren zur Herstellung von Polyurethanen, bevorzugt Polyurethanschaumstoffen, besonders bevorzugt Polyurethanhartschaumstoffen, besonders bevorzugt kontinuierlich nach dem Doppelbandverfahren durch Umsetzung von (a) Isocyanaten mit (b) gegenüber Isocyanaten reaktiven Verbindungen, bevorzugt durch Umsetzung von (a) Isocyanaten mit (b) Verbindungen mit gegenüber Isocyanatgruppen reaktiven Wasserstoffatomen bevorzugt in Gegenwart von Katalysatoren, (c) Treibmittel und gegebenenfalls (e) Zusatzstoffen, besonders bevorzugt Schaumstabilisatoren und Flammschutzmittel ist allgemein bekannt. Das erfindungsgemäße Verfahren zeichnet sich erfinderisch dadurch aus, dass man die Umsetzung in Gegenwart von den erfindungsgemäßen, eingangs ausführlich dargestellten Katalysatoren (i), (ii), (iii) und (iv) durchführt. Dabei werden die Verbindungen (i), (ii), (iii) und (iv) bevorzugt in den folgenden Gewichtsanteilen, jeweils bezogen auf das Gesamtgewicht der Komponenten (i), (ii), (iii) und (iv) während der Umsetzung der Isocyanate mit den gegenüber Isocyanaten reaktiven Verbindungen eingesetzt:
(i) 15 bis 90, bevorzugt 25 bis 88, besonders bevorzugt 32 bis 85, insbesondere 40 bis 76, insbesondere bevorzugt 50 bis 70, insbesondere besonders bevorzugt 55 bis 65 Gew.-%,
(ii) 4 bis 60, bevorzugt 4 bis 45, besonders bevorzugt 5 bis 35, insbesondere 8 bis 25, insbesondere bevorzugt 11 bis 18, insbesondere besonders bevorzugt 14 bis 17 Gew.-%,
(iii) 0,5 bis 55, bevorzugt 5 bis 45, besonders bevorzugt 8 bis 40, insbesondere 10 bis 30, insbesondere bevorzugt 13 bis 22, insbesondere besonders bevorzugt 15 bis 20 Gew.-%,
(iv) 0,5 bis 18, bevorzugt 1 bis 15, besonders bevorzugt 2 bis 11, insbesondere 2 bis 8, insbesondere bevorzugt 3 bis 8 Gew.-%.

Zu den weiteren Komponenten (a) bis (e) ist im einzelnen folgendes zu sagen.
(a) Als Polyisocyanate kommen die üblichen aliphatischen, cycloaliphatischen und insbesondere aromatischen Di- und/oder Polyisocyanate in Frage. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.
   Zur Herstellung von Polyurethan-Hartschaumstoffen wird insbesondere Roh-MDI eingesetzt.
   Im Stand der Technik ist es gegebenenfalls üblich, Isocyanuratgruppen in das Polyisocyanat einzubauen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.
(b) Als Verbindungen mit mindestens zwei gegenüber Isocyanat reaktiven Gruppen, das heißt mit mindestens zwei mit Isocyanatgruppen reaktiven Wasserstoffatomen, kommen insbesondere solche in Frage, die zwei oder mehrere reaktive Gruppen, ausgewählt aus OH-Gruppen, SH-Gruppen, NH-Gruppen, NH₂-Gruppen und CH-aciden Gruppen, wie z.B. β-Diketo-Gruppen, in Molekül tragen.
   Zur Herstellung der nach dem erfindungsgemäßen Verfahren bevorzugt hergestellten Polyurethanhartschaumstoffe kommen insbesondere Verbindungen mit 2 bis 8 OH-Gruppen zum Einsatz. Vorzugsweise eingesetzt werden Polyetherole und/oder Polyesterole. Die Hydroxylzahl der verwendeten Polyetherole und/oder Polyesterole beträgt bei der Herstellung von Polyurethanhartschaumstoffen vorzugsweise 100 bis 850 mg KOH/g, besonders bevorzugt 200 bis 600 mg KOH/g, die Molekulargewichte sind vorzugsweise größer als 400 g/mol.

Bevorzugt enthält Komponente (b) Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht Glycerin, Trimethylolpropan, Pentaerythrit, Sacharose, Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine.

Ferner kann die Komponente (b) optional Polyesterole, Kettenverlängerungs- und/oder Vernetzungsmitteln enthalten. Als Kettenverlängerungs- und/oder Vernetzungsmittel kommen insbesondere zwei- oder dreifunktionelle Amine und Alkohole, insbesondere Diole und/oder Triole mit Molekulargewichten kleiner als 400 g/mol, vorzugsweise von 60 bis 300, zum Einsatz.

Als Treibmittelkomponente (c) werden bevorzugt Kohlenwasserstoffe eingesetzt. Diese können im Gemisch mit Wasser und/oder weiteren physikalische Treibmittel eingesetzt werden. Darunter versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale.

Die Treibmittelkomponente (c) setzt man bevorzugt in einer Menge von 2 bis 45 Gew.-%, bevorzugt 4 bis 30 Gew.-%, besonders bevorzugt 5 bis 20 Gew.-%, bezogen auf das Gesamtgewicht der Komponenten (b) bis (e) ein.

Es ist ferner bevorzugt, dass die Treibmittel-Komponente (c) weniger als 5 Gew.-%, mehr bevorzugt weniger als 2 Gew.-%, besonders bevorzugt weniger als 1 Gew.-%, insbesondere 0 Gew.%, bezogen auf das Gesamtgewicht der Komponenten (b) bis (e), an Fluorchlorkohlenwasserstoffen oder Chlorkohlenwasserstoffen enthält. In einer noch bevorzugteren Variante besteht die Treibmittel-Komponente (c) aus weniger als 5 Gew.-%, mehr bevorzugt weniger als 2 Gew.-%, besonders bevorzugt weniger als 1 Gew.-%, insbesondere 0 Gew.-%, bezogen auf das Gesamtgewicht der Komponenten (b) bis (e), an Fluorkohlenwasserstoffen. In einer bevorzugten Ausführungsform enthält das Treibmittelgemisch (c) somit ausschließlich chemische und halogenfreie physikalische Treibmittel. Bevorzugte chemische Treibmittel sind Wasser und/oder Carbonsäuren, besonders bevorzugt Wasser. Bevorzugte physikalische Treibmittel sind Kohlenwasserstoffe. Besonders bevorzugte Kohlenwasserstoffe sind n-Pentan, Cyclopentan, iso-Pentan und/oder Mischungen der Isomeren. Insbesondere werden n-Pentan und Wasser als Treibmittel (c) verwendet. Ferner ist die alleinige Verwendung von Kohlenwasserstoffen als Treibmittel möglich.

Gegebenenfalls können zusätzlich zu den erfindungsgemäßen Katalysatoren (i), (ii), (iii) und (iv) weitere, aus der Polyurethanchemie allgemein bekannte Katalysatoren (d) eingesetzt werden. Bevorzugt werden allerdings ausschließlich die Katalysatoren (i), (ii), (iii) und (iv) eingesetzt.

Die Umsetzung von (a) mit (b) erfolgt gegebenenfalls in Anwesenheit von (e) Zusatzstoffen, wie z.B. Flammschutzmittel, Füllstoffen, Zellreglern, Schaumstabilisatoren, oberflächenaktiven Verbindungen und/oder Stabilisatoren gegen oxidativen, thermischen oder mikrobiellen Abbau oder Alterung, bevorzugt Flammschutzmittel und/oder Schaumstabilisatoren. Als Schaumstabilisatoren werden Stoffe bezeichnet, welche die Ausbildung einer regelmäßigen Zellstruktur bei der Schaumbildung fördem. Beispielsweise sind genannt: Siliconhaltige Schaumstabilisatoren, wie Siloxan-Oxalkylen-Mischpolymerisate und andere Organopolysiloxane. Ferner alkoxylierungsprodukte von Fettalkoholen, Oxoalkoholen, Fettaminen, Alkylphenolen, Dialkylphenolen, Alkylkresolen, Alkylresorcin, Naphtol, Alkylnaphtol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphtol, Formaldehyd und Alkylnaphtol sowie Formaldehyd und Bisphenol A. Als Alkoxylierungsreagenzien können beispielsweise Ethylenoxid, Propylenoxid, Poly-THF sowie höhere Homologe verwendet werden.

Als Flammschutzmittel können im allgemeinen die aus dem Stand der Technik bekannten Flammschutzmittel verwendet werden. Geeignete Flammschutzmittel sind beispielsweise bromierte Ether (Ixol), bromierte Alkohole wie Dibromneopentylakohol, Tribromneopentylalkohol und PHT-4-Diol sowie chlorierte Phosphate wie z.B. , Tris-(2-chlorethyl)phosphat, Tris-(2-chlorisopropyl)phosphat (TCPP), Tris(1,3-dichlor-isopropyl)phosphat, Tris-(2,3-dibrompropyl)phosphat und Tetrakis-(2-chlorethyl)-ethylendiphosphat. Außer den bereits genannten halogensubstituierten Phosphaten können auch anorganische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen der erfindungsgemäß hergestellten PU-Hartschaumstoffe verwendet werden. Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden. Die Flammschutzmittel werden im Rahmen der vorliegenden Erfindung bevorzugt in einer Menge von 0 bis 65 Gew.-%, besonders bevorzugt von 10 bis 65 Gew.-%, insbesondere von 15 bis 60 Gew.-%, insbesondere bevorzugt zwischen 20 bis 50 Gew.-%, bezogen auf das Gesamtgewicht der Komponenten (b) bis (e) verwendet.

Nähere Angaben über die oben genannten und weitere Ausgangsstoffe sind der Fachliteratur, beispielsweise dem Kunststoffhandbuch, Band VII, Polyurethane, Carl Hanser Verlag München, Wien, 1., 2. und 3. Auflage 1966, 1983 und 1993, zu entnehmen.

Zur Herstellung der Polyurethan-Hartschaumstoffe werden die Polyisocyanate (a) und die Komponenten (b) bis gegebenenfalls (e) in solchen Mengen zur Umsetzung gebracht, dass die Isocyanat-Kennzahl des Schaumes 90 bis 350, bevorzugt 100 bis 180, besonders bevorzugt 110 bis 140 beträgt.

Die Polyurethan-Hartschaumstoffe können diskontinuierlich oder kontinuierlich mit Hilfe bekannter Verfahren (z. B. Doppelband) hergestellt werden. Die hier beschriebene Erfindung bezieht sich auf beide Verfahren, vorzugsweise jedoch auf das kontinuierliche Doppelbandverfahren.

Als besonders vorteilhaft hat es sich erwiesen, nach dem Zweikomponenten-Verfahren zu arbeiten und die Verbindungen (b) mit mindestens zwei mit Isocyanatgruppen reaktiven Wasserstoffatomen zusammen mit den Treibmitteln (c), den Katalysatoren und gegebenenfalls den Zusatzstoffen zu einer sogenannten Polyolkomponente (in dieser Schrift auch vorstehend als Polyolkomponente bezeichnet) zu vereinigen und diese mit den Polyisocyanaten oder Mischungen aus den Polyisocyanaten und gegebenenfalls Treibmitteln, auch als Isocyanatkomponente bezeichnet, zur Umsetzung zu bringen.

Der Einsatz von Polyurethan-Hartschaumstoffen erfolgt insbesondere zur Wärmedämmung, beispielsweise von Kühlgeräten, Behältern oder Gebäuden. Als Polyurethane im Sinne der vorliegenden Patentanmeldung werden auch polymere Isocyanataddukte verstanden, die neben Urethangruppen noch weitere Gruppen enthalten, wie sie beispielsweise durch Reaktion der Isocyanatgruppe mit sich selbst entstehen, beispielsweise Isocyanuratgruppen, oder die durch Reaktion der Isocyanatgruppen mit anderen Gruppen als mit Hydroxylgruppen entstehen, wobei die genannten Gruppen meist gemeinsam mit den Urethangruppen im Polymer vorliegen.

Die vorliegende Erfindung soll durch nachfolgende Beispiele veranschaulicht werden:

### Herstellung eines Polyurethanhartschaumstoffes

### entsprechend Vergleichsbeispiel:

### A-Komponente

- 48,7 Gew.-Teile: eines Polyetherpolyols mit einer OHZ von - 490 mg KOH/g hergestellt durch Polyaddition von Propylenoxid an einer Saccharose/Glycerin-Mischung als Startermolekül.
- 15 Gew.-Teile: eines Esters auf Basis von Tetrabromphthalsäure
- 2 Gew.-Teile: Glycerol
- 28,5 Gew.-Teile: Tris-2-Chlorisopropylphosphat
- 4 Gew.-Teile: Diethylethanphosphonat
- 0,5 Gew.-Teile: Wasser
- 1,3 Gew.-Teile: Stabilisator DC193 der Fa. Air Products

### B-Komponente

Polymer MDI (Lupranat® M50, BASF Aktiengesellschaft) mit einem NCO-Gehalt von 31 % und einer Viskosität von 500 mPa s bei 25°C.

### Zusatzstoffe

- 2,2 Gew.-Teile: einer Mischung aus 1,3,5-Tris(3-dimethylaminopropyl)-hexahydros-triazin und Dimethylcyclohexylamin (DMCHA)
- 1,3 Gew.-Teile: Wasser
- 6,0 Gew.-Teile: n-Pentan

Die beiden Komponenten A und B sowie die Zusatzstoffe wurden bei einer Kennzahl von 130 verschäumt. Das oben beschriebene System ist nachfolgend als Vergleichsbeispiel bezeichnet.

Die Prüfkörper sowohl für die Rasterelektronenmikroskopische Untersuchung der Zellmorphologie als auch für die Bestimmung der Druckfestigkeit und des Druck-E-Moduls gemäß DIN 53421/ DIN EN ISO 604 wurden nach dem Doppelbandverfahren hergestellt.

Zur Herstellung der erfindungsgemäßen Beispiele erfolgte ein Austausch der bei den Zusatzstoffen angeführten 2,2 Teile einer Mischung aus 1,3,5-Tris(3-dimethylaminopropyl)-hexahydro-s-triazin und Dimethylcyclohexylamin (DMCHA) durch die nachfolgend beschriebenen Katalystorsysteme:

### Anwendungsbeispiel 1:

- 1,85 Gew.-Teile: einer Mischung bestehend aus 61 Gewichtsprozent Dimethylcyclohexylamin (DMCHA), 15 Gewichtsprozent 1,3,5-Tris(3-dimethylaminopropyl)-hexahydro-s-triazin, 18 Gewichtsprozent Pentamethyldiethylenetriamin sowie 6 Gewichtsprozent Kalium-2-ethylhexanoat (Kaliumoktoat).
- 0,1 Gew.-Teile: Diethylenglykol (DEG)

### Anwendungsbeispiel 2:

- 1,75 Gew.-Teile: einer Mischung bestehend aus 62 Gewichtsprozent Dimethylcyclohexylamin (DMCHA), 16 Gewichtsprozent 1,3,5-Tris(3-dimethylaminopropyl)-hexahydro-s-triazin, 19 Gewichtsprozent Pentamethyldiethylenetriamin sowie 3 Gewichtsprozent Kaliumacetat.
- 0,15 Gew.-Teile: Diethylenglykol (DEG)

### Anwendungsbeispiel 3:

- 1,7 Gew.-Teile: einer Mischung bestehend aus 61 Gewichtsprozent Dimethylcyclohexylamin (DMCHA), 15 Gewichtsprozent 1,3,5-Tris(3-dimethylaminopropyl)-hexahydro-s-triazin, 18 Gewichtsprozent Bis-(dimethylaminoethyl)ether sowie 6 Gewichtsprozent Kalium-2-ethylhexanoat (Kaliumoktoat).
- 0,15 Gew.-Teile: Diethylenglykol (DEG)

### Anwendungsbeispiel 4:

- 1,5 Gew.-Teile: einer Mischung bestehend aus 51 Gewichtsprozent Dimethylcyclohexylamin (DMCHA), 20 Gewichtsprozent 1,3,5-Tris(3-dimethylaminopropyl)-hexahydro-s-triazin, 29 Gewichtsprozent Bis-(dimethylaminoethyl)ether

Die erfindungsgemäßen Beispiele wurden in Analogie zu dem Vergleichsbeispiel verschäumt.

Die Ergebnisse der Prüfungen sind in den Tabellen 1 und 2 gegenübergestellt.

**Tabelle 1: Vergleich der Druckfestigkeit und des Druck-E-Moduls senkrecht zur Deckschicht nach gemäß DIN 53421/ DIN EN ISO 604.**

| | Druckfestigkeit [N/mm²] | Druck-E-Modul [N/mm²] | Schaumrohdichte [g/l] | Druckfestigkeit [N/mm²]¹ | Druck-E-Modul [N/mm²]¹ |
|---|---|---|---|---|---|
| Vergleichsbeispiel | 0,10 | 3,1 | 38,2 | 0,11 | 3,3 |
| Anwendungsbeispiel 1 | 0,13 | 3,7 | 39,5 | 0,13 | 3,8 |
| Anwendungsbeispiel 2 | 0,13 | 3,6 | 39,2 | 0,13 | 3,7 |
| Anwendungsbeispiel 3 | 0,14 | 3,8 | 40,1 | 0,14 | 3,8 |
| Anwendungsbeispiel 4 | 0,14 | 3,8 | 39,4 | 0,14 | 3,9 |

| | | | | | |
|---|---|---|---|---|---|
| ¹⁾ Druck-Daten nominiert auf eine Rohdichte von 40 g/l. Die Normierung erfolgte nach folgender Formel: Nominierter Wert = Wert bei gemessener Rohdichte * (Norm-Rohdichte / gemessene Rohdichte) | | | | | |

(S.B. Burns and E.L. Schmidt, Polyurethanes World Congress 1993, The PIR/PUR Ratio: A Novel Trimer Conversion Test with High Correlation to the Factory Mutual Calorimeter for HCFC-141 b Blown Polyisocyanurate Foams; 234-240.)

**Tabelle 2: Vergleich der Verhältnisse von Zellbreite (Bandlaufrichtungsdimension) zu Zellhöhe (Dimension senkrecht zur Deckschicht) gemäß der rasterelektronenmikroskopischen Auswertung.**

| | Anisotropie ¹ |
|---|---|
| Vergleichsbeispiel | 1,7 |
| Anwendungsbeispiel 1 | 1,5 |
| Anwendungsbeispiel 2 | 1,4 |
| Anwendungsbeispiel 3 | 1,4 |
| Anwendungsbeispiel 4 | 1,3 |

| | |
|---|---|
| ¹⁾ Als Anisotropie wird hier das der Verhältnis von Zellbreite (Bandlaufrichtungsdimension) zu Zellhöhe (Dimension senkrecht zur Deckschicht) gemäß der rasterelektronenmikroskopischen Auswertung verstanden. | |

## Patentansprüche

1. Katalysatorsystem enthaltend
(i) Verbindung mit 1, 2, 3, 4 oder 5 Stickstoffatomen,
(ii) Verbindung mit mehr als 1 Stickstoffatom,
(iii) Verbindung mit mindestens 1 Stickstoffatom,
wobei als (i), (ii) und (iii) jeweils unterschiedliche Verbindungen enthalten sind.

2. Katalysatorsystem enthaltend
(i) Verbindung mit 1, 2, 3, 4 oder 5 Stickstoffatomen,
(ii) Verbindung mit mehr als 1 Stickstoffatom,
(iii) Verbindung mit mindestens 1 Stickstoffatom,
(iv) Carboxylat,
wobei als (i), (ii), (iii) und (iv) jeweils unterschiedliche Verbindungen enthalten sind.

3. Katalysatorsystem gemäß Anspruch 2, **dadurch gekennzeichnet, dass** die Verbindungen (i), (ii), (iii) und (iv) in den folgenden Gewichtsanteilen, jeweils bezogen auf das Gesamtgewicht der Komponenten (i), (ii), (iii) und (iv) in dem Katalysatorsystem enthalten sind:
(i) 15 bis 90 Gew.-%,
(ii) 4 bis 60 Gew.-%,
(iii) 0,5 bis 55 Gew.-%,
(iv) 0,5 bis 18 Gew.-%.

4. Verfahren zur Herstellung von Polyurethanen durch Umsetzung von (a) Isocyanaten mit (b) gegenüber Isocyanaten reaktiven Verbindungen, **dadurch gekennzeichnet, dass** man die Umsetzung in Gegenwart von den Katalysatoren (i), (ii) und (iii) gemäß Anspruch 1 oder in Gegenwart von den Katalysatoren (i), (ii), (iii) und (iv) gemäß Anspruch 2 durchführt.

5. Verfahren zur Herstellung von Polyurethanen gemäß Anspruch 4, **dadurch gekennzeichnet, dass** die Verbindungen (i), (ii) und (iii) in den folgenden Gewichtsanteilen, jeweils bezogen auf das Gesamtgewicht der Komponenten (i), (ii) und (iii) während der Umsetzung enthalten sind:
(i) 15 bis 90 Gew.-%,
(ii) 4 bis 60 Gew.-%,
(iii) 0,5 bis 55 Gew.-%.

6. Verfahren zur Herstellung von Polyurethanen gemäß Anspruch 4, **dadurch gekennzeichnet, dass** die Verbindungen (i), (ii), (iii) und (iv) in den folgenden Gewichtsanteilen, jeweils bezogen auf das Gesamtgewicht der Komponenten (i), (ii), (iii) und (iv) während der Umsetzung enthalten sind:
(i) 15 bis 90 Gew.-%,
(ii) 4 bis 60 Gew.-%,
(iii) 0,5 bis 55 Gew.-%,
(iv) 0,5 bis 18 Gew.-%.

7. Verfahren zur Herstellung von Polyurethanhartschaumstoffen durch Umsetzung von (a) Isocyanaten mit (b) Verbindungen mit gegenüber Isocyanatgruppen reaktiven Wasserstoffatomen, (c) Treibmittel, (e) Zusatzstoffen gemäß Anspruch 4, **dadurch gekennzeichnet, dass** man die Treibmittelkomponente (c) in einer Menge von 2 bis 45 Gew.-%, bezogen auf das Gesamtgewicht der Komponenten (b) bis (e) einsetzt.

8. Verfahren zur Herstellung von Polyurethanhartschaumstoffen durch Umsetzung von (a) Isocyanaten mit (b) Verbindungen mit gegenüber Isocyanatgruppen reaktiven Wasserstoffatomen, (c) Treibmittel, (e) Zusatzstoffen gemäß Anspruch 4, **dadurch gekennzeichnet, dass** die Treibmittel-Komponente (c) weniger als 5 Gew.-%, bezogen auf das Gesamtgewicht der Komponenten (b) bis (e), an Fluorchlorkohlenwasserstoffen und Chlorkohlenwasserstoffen enthält.

9. Verfahren zur Herstellung von Polyurethanhartschaumstoffen durch Umsetzung von (a) Isocyanaten mit (b) Verbindungen mit gegenüber Isocyanatgruppen reaktiven Wasserstoffatomen, (c) Treibmittel, (e) Zusatzstoffen gemäß Anspruch 4, **dadurch gekennzeichnet, dass** man als Treibmittel-Komponente (c) n-Pentan, Cyclopentan, iso-Pentan und/oder Mischungen der Isomeren verwendet.

10. Verfahren zur Herstellung von Polyurethanhartschaumstoffen durch Umsetzung von (a) Isocyanaten mit (b) Verbindungen mit gegenüber Isocyanatgruppen reaktiven Wasserstoffatomen, (c) Treibmittel, (e) Zusatzstoffen gemäß Anspruch 4, **dadurch gekennzeichnet, dass** Flammschutzmittel (e) in einer Menge von 10 bis 65 Gew.-%, bezogen auf das Gesamtgewicht der Komponenten (b) bis (e) verwendet werden.

11. Verfahren zur Herstellung von Polyurethanhartschaumstoffen durch Umsetzung von (a) Isocyanaten mit (b) Verbindungen mit gegenüber Isocyanatgruppen reaktiven Wasserstoffatomen, (c) Treibmittel, (e) Zusatzstoffen gemäß Anspruch 4, **dadurch gekennzeichnet, dass** zur Herstellung der Polyurethan-Hartschaumstoffe die Polyisocyanate (a) und die Komponenten (b) bis (e) in solchen Mengen zur Umsetzung gebracht werden, dass die Isocyanat-Kennzahl 90 bis 350 beträgt.

12. Polyurethane, insbesondere Polyurethanhartschaumstoffe erhältlich durch ein Verfahren gemäß einem der Ansprüche 4 bis 11.

13. Polyurethanhartschaumstoffe enthaltend
(i) Verbindung mit 1, 2, 3, 4 oder 5 Stickstoffatomen,
(ii) Verbindung mit mehr als 1 Stickstoffatom,
(iii) Verbindung mit mindestens 1 Stickstoffatom,
(iv) Carboxylat,
wobei als (i), (ii), (iii) und (iv) jeweils unterschiedliche Verbindungen enthalten sind und wobei die Verbindungen (i), (ii), (iii) und (iv) in den folgenden Gewichtsanteilen, jeweils bezogen auf das Gesamtgewicht der Komponenten (i), (ii), (iii) und (iv) in dem Polyurethanhartschaumstoff enthalten sind:
(i) 15 bis 90 Gew.-%,
(ii) 4 bis 60 Gew.-%,
(iii) 0,5 bis 55 Gew.-%,
(iv) 0,5 bis 18 Gew.-%.
